Europäisches Patentamt

European Patent Office

Office européen des brevets

(19)

(11) Veröffentlichungsnummer: **0 155 553**
**B1**

(12) **EUROPÄISCHE PATENTSCHRIFT**

(45) Veröffentlichungstag der Patentschrift:
29.11.89

(21) Anmeldenummer: 85102154.3

(22) Anmeldetag: 27.02.85

(51) Int. Cl.⁴: **B 01 F 3/04,** B 01 D 19/00,
B 01 J 10/00

(54) Einrichtung zur Behandlung einer stark schaumbildenden Flüssigkeit mit einem Gas.

(30) Priorität: 08.03.84 DE 3408372

(43) Veröffentlichungstag der Anmeldung:
25.09.85 Patentblatt 85/39

(45) Bekanntmachung des Hinweises auf die Patenterteilung:
29.11.89 Patentblatt 89/48

(84) Benannte Vertragsstaaten:
AT BE CH DE FR GB IT LI NL SE

(56) Entgegenhaltungen:
EP-A- 0 018 168
DE-A- 1 517 502
DE-A- 2 126 500
DE-A- 2 454 526
DE-A- 2 644 378
DE-A- 2 707 966
GB-A- 1 447 711
US-A- 2 353 833
US-A- 3 492 795
US-A- 3 495 952
US-A- 4 263 025
US-A- 4 333 499

(73) Patentinhaber: Firma Füllpack Dipl.Brau-Ing. D. Wieland,
Oststrasse 1, D-4000 Düsseldorf (DE)

(72) Erfinder: Meinert, Hertmut, Hünnefeldstrasse 22,
D-495 Minden (DE)

(74) Vertreter: Feder, Heinz, Dr. et al, Dipl.-Ing. P.-C. Sroka,
Dr. H. Feder Dipl.-Phys. Dr. W.-D. Feder, Patentanwälte
Dominikanerstrasse 37, D-4000 Düsseldorf 11 (DE)

## Beschreibung

Die Erfindung betrifft eine Einrichtung zur Behandlung einer stark schaumbildenden Flüssigkeit mit einem Gas.

Unter «Behandlung» im Sinne der vorliegenden Erfindung soll dabei grundsätzlich sowohl die Führung eines Gas-Flüssigkeitsgemisches durch eine Reaktionsstrecke zur innigen Durchmischung von Gas und Flüssigkeit und zur Durchführung einer physikalischen oder chemischen Reaktion zwischen Flüssigkeit und Gas als auch die Abtrennung eines ungelöst bleibenden Gasanteils aus der Flüssigkeit unter gleichzeitiger Schaumabscheidung verstanden werden. Der Begriff «Behandlung» umfaßt in einem weiteren Sinne auch die Erzeugung des Flüssigkeits-Gasgemisches vor der Führung durch die Reaktionsstrecke bzw. die Vorschaltung einer weiteren Reaktionsstrecke zur Vormischung von Flüssigkeit und Gas.

Es ist bekannt, ein Gas oder ein Gasgemisch in eine in einer Leitung strömende Flüssigkeit einzuleiten, um eine physikalische oder chemische Reaktion zwischen der Flüssigkeit und dem Gas zu erzeugen.

So ist es beispielsweise bei der Herstellung von Getränken bekannt, mittels eines Strahlapparates Kohlendioxidgas in die Flüssigkeit einzuleiten, wobei durch die innige Durchmischung von Gas und Flüssigkeit erreicht wird, daß sich ein bestimmter Anteil des zugeführten Gases in der Flüssigkeit löst (s. z. B. DE-OS-1 517 502 und DE-OS-2 644 378).

Es ist weiterhin bekannt (DE-OS-2 454 526), zur Neutralisation von Abwässern, der Flüssigkeit mittels eines Strahlapparates ein Gas oder ein Gasgemisch zuzuführen, das beispielsweise Kohlendioxidgas enthalten kann. Durch die zwischen der beispielsweise alkalischen Flüssigkeit und dem Kohlendioxidanteil des Gasgemisches auftretende chemische Reaktion kann eine Absenkung des pH-Wertes der Flüssigkeit erreicht werden.

Die Behandlung einer Flüssigkeit mit einem Gas in der oben angegebenen Weise kann auf große Schwierigkeiten stoßen, wenn es sich um eine Flüssigkeit handelt, die aufgrund der in ihr gelösten organischen Substanzen zu starker Schaumbildung neigt. Es ist dann außerordentlich schwierig ungelöst bleibende Anteile des zugeführten Gases oder Gasgemisches aus der Flüssigkeit nach der durchgeführten Reaktion so abzutrennen, daß einerseits die behandelte Flüssigkeit schaumfrei abgeführt werden kann und andererseits bei der Abtrennung des Gases nicht zuviel Flüssigkeit durch Schaumanteile verlorengeht.

Die der Erfindung zugrunde liegende Aufgabe bestand darin, eine Einrichtung der eingangs erwähnten Art zu schaffen, mit der stark schaumbildende Flüssigkeiten einer Behandlung im oben definierten Sinne unterworfen werden können, und zwar in der Weise, daß einerseits zur Erzielung der erwünschten Reaktion eine innige Durchmischung von Flüssigkeit und Gas erzeugt wird, und andererseits nach Durchführung der Reaktion eine saubere Trennung des ungelöst bleibenden Gasanteils von der Flüssigkeit möglich ist.

Es ist bekannt, zur Abscheidung von Feststoffen aus Gasen oder Flüssigkeiten Reaktionsgefäße zu verwenden, welche ein zylindrisches Oberteil und ein sich konisch nach unten verjüngendes Unterteil aufweisen, wobei am Oberteil tangential zur zylindrischen Innenfläche des Oberteils ein Einlaß für ein Feststoff-Gasgemisch oder Feststoff-Flüssigkeitsgemisch und am oberen Ende des Oberteils in axialer Richtung ein Auslaß für Gas sowie am unteren Ende des Unterteils ein Auslaß für Flüssigkeit angeordnet sind. Derartige Einrichtungen werden als Zyklone bezeichnet.

Die Erfindung geht von der grundsätzlichen Erkenntnis aus, daß ein derartiger Zyklon zur Lösung der oben angegebenen Aufgabe geeignet ist, wenn er durch geeignete Maßnahmen an die bei einem Flüssigkeits-Gasgemisch einer stark schaumbildenden Flüssigkeit herrschenden Bedingungen angepaßt wird.

Ausgehend von einer Einrichtung mit den im Oberbegriff des Patentanspruchs 1 angegebenen Merkmalen geschieht die Lösung der oben angegebenen Aufgabe erfindungsgemäß mit den im kennzeichnenden Teil des Patentanspruchs 1 angegebenen Merkmalen.

Vorteilhafte Ausbildungen der erfindungsgemäßen Einrichtung sind in den Unteransprüchen beschrieben.

Bei der erfindungsgemäßen Einrichtung ist das Reaktionsgefäß so ausgestaltet, daß dem eingeführten Flüssigkeits-Gasgemisch, ähnlich wie bei einem Zyklon, eine Rotationsbewegung aufgezwungen wird, die aber durch die erfindungsgemäße Ausbildung wieder gebrochen wird, wobei durch die Vergrößerung der Oberfläche des Flüssigkeits-Gasgemisches und die starke Reduzierung der Durchtrittsgeschwindigkeit und die besondere Führung der Flüssigkeits- und Gasanteile eine ausgezeichnete Trennung von Gas und Flüssigkeit unter starker Rückbildung der entstandenen Schaumanteile erreicht wird. Eine besonders vorteilhafte Ausführungsform der erfindungsgemäßen Einrichtung, bei der in besonders wirksamer Weise eine Schaumabscheidung erreicht wird, ist in Patentanspruch 9 beschrieben. Diese Ausführungsform wird weiter unten anhand eines Ausführungsbeispiels genauer erläutert.

Weiterhin hat es sich als besonders vorteilhaft erwiesen, wenn die erfindungsgemäße Einrichtung zusätzlich die Merkmale der Patentansprüche 13 bis 16 aufweist. Die Vorschaltung eines hinsichtlich seiner Innendimensionen besonders ausgestalteten Strahlapparates ermöglicht nicht nur eine besonders gute Vormischung des dem Reaktionsgefäß zugeführten Flüssigkeits-Gasgemisches, sondern ermöglicht insbesondere die Anwendung der erfindungsgemäßen Einrichtung zur Behandlung einer stark schaumbildenden Flüssigkeit mit einem Gasgemisch, das in großen Mengen zugeführt werden soll, so daß beispielsweise Volumenverhältnisse von Gas zur Flüssigkeit erreicht werden können, die von 3 : 1 bis 10 : 1 reichen. Eine solche Ausbildung ermöglicht es, beispielsweise eine stark schaumbildende alkalische Flüssigkeit mit Rauchgasen zu behandeln, die einen bestimmten Anteil von Kohlendioxidgas enthalten. Infolge der chemischen Reaktion zwischen dem Kohlendioxidgasanteil des Rauchgases und der Flüssigkeit kann der pH-Wert der Flüssigkeit in vorgegebener Weise herabgesetzt werden. Anschließend an die Reaktion kann der erhebliche Anteil des Gases, der an der chemischen Reaktion nicht teilgenommen hat, beispielsweise der hohe Stickstoffanteil aus der Flüssigkeit bei sehr guter Schaumabscheidung abgetrennt werden.

Es hat sich herausgestellt, daß auch bei einem sehr hohen Gasanteil des Flüssigkeits-Gasgemisches bei der erfindungsgemäßen Einrichtung der Volumeninhalt des Reaktionsgefäßes relativ niedrig gehalten werden kann, was zu einer erheblichen Kostenverminderung führt. So ist es beispielsweise möglich, das Reaktionsgefäß so zu dimensionieren, daß sein Volumen nur $^1/_{35}$ der stündlichen Durchflußleistung an Flüssigkeit beträgt.

Die Geschwindigkeit der der Spritzdüse des Strahlapparates zugeführten Treibflüssigkeit beträgt zweckmäßig 18 bis 23 m/sec., wobei gute Werte mit 20 m/sec. erhalten werden. Dabei soll der Strahlapparat so ausgelegt sein, daß die Geschwindigkeit des Gas-Flüssigkeitsgemisches an der Übergangsstelle zwischen dem zylindrischen und dem sich konisch aufweitenden Mischrohr kleiner als 2 m/sec. ist.

Im folgenden wird anhand der beigefügten Zeichnungen ein Ausführungsbeispiel für eine Einrichtung nach der Erfindung näher erläutert.

In den Zeichnungen zeigen:

Fig. 1 ein Reaktionsgefäß an einer erfindungsgemäßen Einrichtung in einem axialen Längsschnitt;

Fig. 2 einen Schnitt nach der Linie II-II in Fig. 1;

Fig. 3 in einem vertikalen Teilschnitt ein Strahlapparat zur Vorschaltung an das Reaktionsgefäß nach Fig. 1 und 2;

Fig. 4 in einer Prinzipdarstellung eine Ausführungsform der erfindungsgemäßen Einrichtung mit zwei Reaktionsgefäßen nach Fig. 1 und 2 und einem Strahlapparat nach Fig. 3.

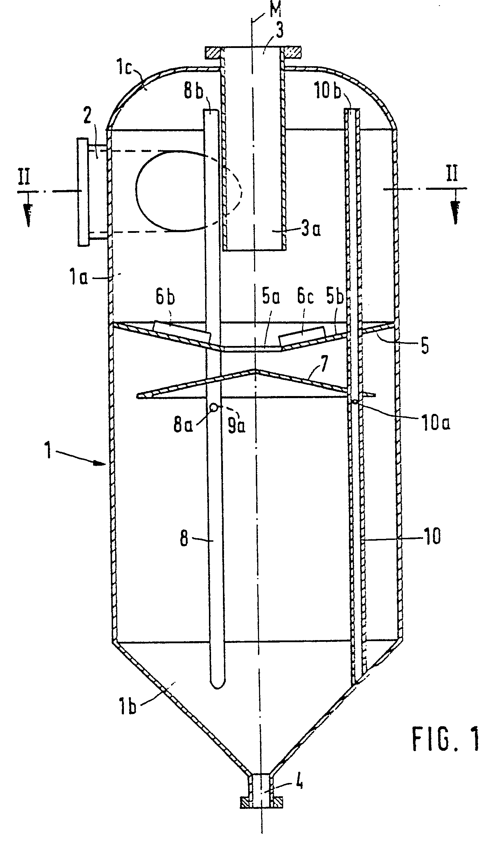

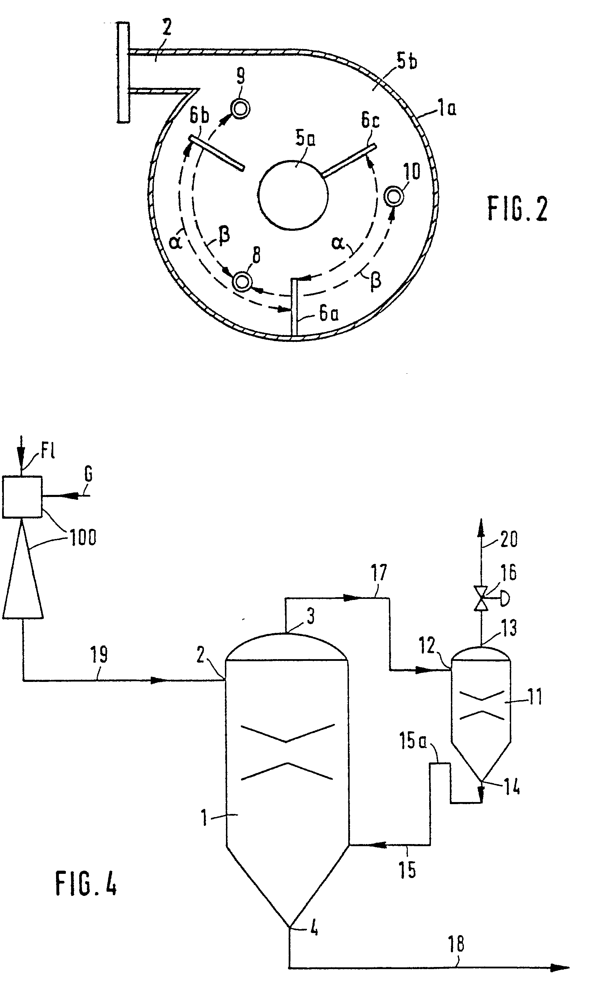

Das in Fig. 1 und 2 dargestellte Reaktionsgefäß 1 entspricht in seinem äußeren Aufbau einem Zyklon. Es ist so aufgestellt, daß seine axiale Längsachse M senkrecht zur nicht dargestellten Erdoberfläche steht und weist ein zylindrisches Oberteil 1a und ein sich konisch nach unten verjüngendes Unterteil 1b auf. Am Oberteil ist etwa in seinem oberen Drittel ein tangential zur zylindrischen Innenfläche des Oberteils verlaufender Einlaß 2 für ein Flüssigkeits-Gasgemisch angeordnet. Am unteren Ende des Unterteils 1b befindet sich ein Auslaßstutzen 4 für Flüssigkeit. Weiterhin weist das an seinem oberen Ende mit einem Deckel 1c abgeschlossene Oberteil 1a einen durch den Deckel 1c axial nach oben herausgeführten Auslaß 3 für Gas auf. Der Gasauslaß 3 besitzt einen axial nach innen ragenden Rohrstutzen 3a, dessen unteres Ende unterhalb des Einlasses 2 für das Flüssigkeits-Gasgemisch liegt.

Etwa in der Mitte oder kurz oberhalb der Mitte des Oberteils 1a ist ein Zwischenboden 5 angeordnet, der in seinem Querschnitt sich nach oben öffnend, kegelstumpfförmig ausgebildet ist, mit festen Mantelflächen 5b und einer zentralen Durchflußöffnung 5a. Auf der Oberseite der Mantelflächen 5b dieses trichterförmig wirkenden Zwischenbodens 5 sind in radialer Richtung verlaufende Prallbleche 6a, 6b und 6c angeordnet, deren genauer Verlauf Fig. 2 zu entnehmen ist. Bei dem dargestellten Ausführungsbeispiel sind drei derartiger Prallbleche vorhanden, die in Umfangsrichtung gesehen in Winkelabständen von = 120° und in radialer Richtung gegeneinader versetzt angeordnet sind. Die Länge jedes der Prallbleche 6a bis 6c entspricht ca. der halben Länge der Mantelfläche 5b des Kegelstumpfes. Dabei ist das in Durchflußrichtung der Flüssigkeit gesehen erste Prallblech 6a so angeordnet, daß es an die Innenwand des Oberteils 1b angrenzt, während das dritte Prallblech 6c an den Außenrand der zentralen Durchflußöffnung 5a angrenzt und das zweite Prallblech 6b um ca. eine halbe Länge gegen das erste Prallblech 6a versetzt angeordnet ist. Auf diese Weise trifft die sich auf der Mantelfläche 5b spiralig nach innen auf die Durchflussöffnung 5a zu bewegende Flüssigkeit zunächst auf das Prallblech 6a, dann auf das Prallblech 6b und schließlich auf das Prallblech 6c. Die Rotationsbewegung der Flüssigkeit wird also an drei Stellen gebrochen und ihre Geschwindigkeit entsprechend erniedrigt.

Die Höhe der Prallbleche beträgt ca. $^1/_6$ ihrer Länge.

Selbstverständlich ist es auch möglich, auf dem Zwischenboden eine größere Anzahl von Prallblechen anzuordnen.

Unmittelbar unterhalb des Zwischenbodens 5 ist ein mit seiner Spitze nach oben weisender kegelförmiger Verteilerschirm 7 angeordnet. Der Durchmesser dieses Verteilerschirms 7 ist kleiner als der Innendurchmesser des Oberteils 1b, und zwar bei dem dargestellten Ausführungsbeispiel etwa im Verhältnis 6 : 7.

Parallel zur axialen Mittelachse M sind im Reaktionsgefäß insgesamt drei Gasableitungsrohre 8, 9, 10 angeordnet. Wie aus Fig. 2 zu entnehmen, beträgt der in Umfangsrichtung gesehene Winkelabstand der Gasableitungsrohre = 120°. Die Gasableitungsrohre weisen dicht unterhalb des Verteilerschirms 7 Gaseintrittsöffnungen 8a, 9a, 10a auf und sind soweit nach oben geführt, daß ihre Gasaustrittsöffnungen 8b, 9b, 10b oberhalb des Einlasses 2 für das Gas-Flüssigkeitsgemisch und damit auch oberhalb des unteren Endes des Rohrstutzens 3a liegen.

Das untere Ende der Gasableitungsrohre 8 bis 10 ist im kegelstumpfförmigen Unterteil 1b des Reaktionsgefäßes befestigt.

Die Wirkungsweise des in den Fig. 1 und 2 dargestellten Reaktionsgefäßes ist folgende:

Ein durch den Einlaß 2 eintretendes stark aufgeschäumtes Flüssigkeits-Gasgemisch gerät durch die besondere Ausbildung des Einlasses in eine Rotationsbewegung um die Mittelachse M an der Innenwand des Oberteils 1a entlang. Beim Abwärtsfließen gerät der Flüssigkeitsstrom schließlich auf den Zwischenboden 5, an dem die Rotationsbewegung in der oben angegebenen Weise durch die Prallbleche 6a bis 6c gebrochen wird, wobei bereits ein erheblicher Anteil des Gases frei wird und durch den Austrittsstutzen 3a und den Auslaß 3 abgeführt werden kann. Der restliche, immer noch gashaltige Flüssigkeitsanteil gelangt durch die zentrale Durchlaßöffnung 5a auf den Verteilerschirm 7, auf dem er umgelenkt wird und radial nach außen abfließt. Die hierbei freiwerdenden Gasanteile können ebenfalls durch die zentrale Durchflußöffnung 5a und den Austrittsstutzen 3a abgeführt werden. Vom Verteilerschirm 7 gelangt die Flüssigkeit wiederum an der Außenseite des Oberteils 1a entlang in den unteren Bereich des Reaktionsgefäßes und schließlich in das Unterteil 1b. Die hierbei noch freiwerdenden Gasanteile treten in die Gaseintrittsöffnungen 8a, 9a, 10a ein und werden durch die Gasableitungsrohre 8, 9, 10 nach oben in den oberen Teil des Behälters unterhalb des Deckels 1c abgeleitet. Hierbei, etwa in Form von Schaum mitgeführte Flüssigkeitsanteile gelangen wieder von oben in den Kreislauf des Flüssigkeits-Gasgemisches, während die Gasanteile durch den Auslaßstutzen 3a und den Auslaß abgeführt werden können.

Selbstverständlich ist es grundsätzlich möglich, innerhalb des Reaktionsgefäßes 1 in mehreren untereinanderliegenden Stufen abwechselnd Zwischenböden 5 und Verteilerschirme 7 anzuordnen.

Eine besonders wirksame Einrichtung zur Behandlung einer stark schaumbildenden Flüssigkeit mit einem Gas- oder Gasgemisch ist in Fig. 4 schematisch dargestellt. Bei dieser Einrichtung ist dem Reaktionsgefäß 1, das so aufgebaut sein kann wie in Fig. 1 und 2 beschrieben, ein weiteres kleineres Reaktionsgefäß 11 zugeordnet, das in der genau der gleichen Weise in entsprechend verkleinerten Dimensionen aufgebaut ist, und zwar so, daß sich die Volumina des kleinen Reaktionsgefäßes 11 zum großen Reaktionsgefäß 1 wie etwa 1 : 5 bis 15 verhalten.

Bei der in Fig. 4 dargestellten Einrichtung wird nun der Auslaß 3 für Gas über eine Leitung 17 an den Einlaß 12 für ein Flüssigkeits-Gasgemisch des zweiten Reaktionsgefäßes 11 angeschlossen. Der Auslaß 14 für Flüssigkeit am zweiten Reaktionsgefäß 11 wird über eine Leitung 15 mit einem zwischengeschalteten Siphon 15a in das erste Reaktionsgefäß 1 zurückgeführt, und zwar an einer Stelle, die (s. Fig. 1) jedenfalls unterhalb des Schirmes 7 und auch unterhalb der Gaseintrittsöffnungen 8a, 9a, 10a liegt.

Durch diese Zuordnung des kleinere Reaktionsgefäßes 11 zum größeren Reaktionsgefäß 1 wird erreicht, daß Schaumanteile, die gegebenenfalls bei einer sehr stark schäumenden Flüssigkeit aus dem Auslaß 3 des Reaktionsgefäßes 1 auftreten, im Reaktionsgefäß 11 abgeschieden werden, so daß aus dem Auslaß 13 für Gas am zweiten Reaktionsgefäß 11 nurmehr ein reiner Gasstrom entweicht. In der sich an den Auslaß 13 für Gas am Reaktionsgefäß 11 anschließenden Gasableitung kann ein Reduzierventil angeordnet sein, so daß in der Einrichtung mit Überdruck gearbeitet werden kann.

Selbstverständlich kann grundsätzlich im zweiten Reaktionsgefäß auch noch ein drittes Reaktionsgefäß gleicher Bauart im gleichen oder verkleinerten Maßstab zugeordnet werden, falls die besonderen Umstände dies für eine saubere Schaumabscheidung notwendig machen.

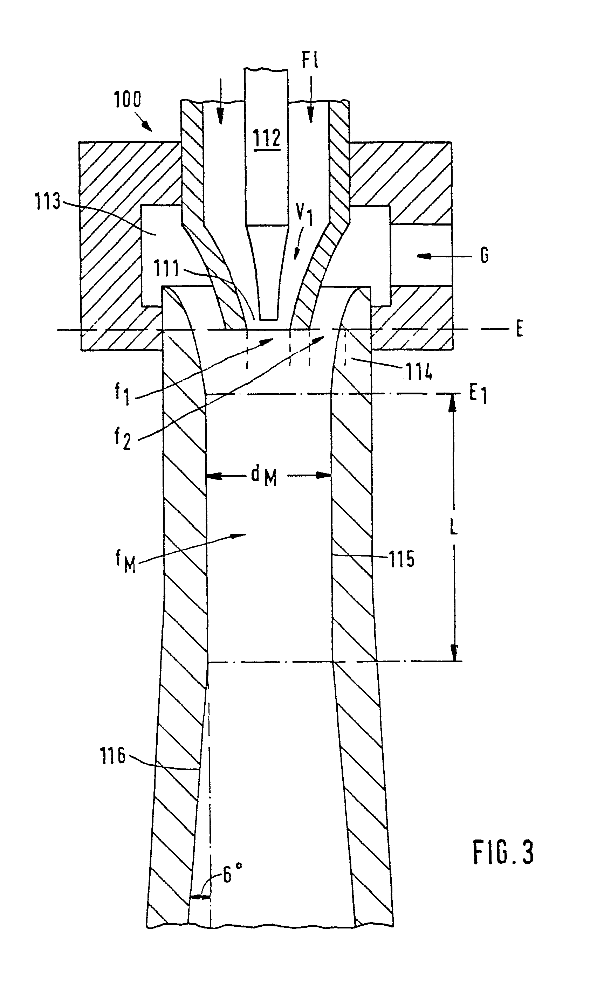

Bei der in Fig. 4 dargestellten Einrichtung ist dem ersten Reaktionsgefäß 1 ein Strahlapparat zur Erzeugung des dem Einlaß 2 zugeführten Flüssigkeits-Gasgemisches vorgeschaltet. Der Aufbau des Strahlapparates ist Fig. 3 zu entnehmen. Der Strahlapparat 100 weist eine Treibdüse 111 auf, in der eine Düsennadel 112 angeordnet ist. Der Treibdüse 111 wird eine Flüssigkeit Fl so zugeführt, daß sie durch den Austrittsquerschnitt f1 mit einer Geschwindigkeit von etwa 18 bis 23 m/sec. herausgetrieben wird. Die Treibdüse 111 ist umgeben von der Unterdruckkammer 113, der ein Gas oder Gasgemisch G zugeführt werden kann. Gegenüber der Treibdüse 111 ist die Fangdüse 114 angeordnet, an die sich ein zylindrisches Mischrohr 115 anschließt. Das zylindrische Mischrohr 115 setzt sich fort in einem sich konisch aufweitendem Mischrohr, bzw. einem Difusor 116, der einen halben Öffnungswinkel von ca. 6° aufweist.

Der ringförmige Eintrittsquerschnitt der Fangdüse 114 in der Ebene E des Austrittsquerschnittes f1 der Treibdüse 111 ist mit f2 bezeichnet und wird in der Ebene E gemessen. Die Länge L des zylindrischen Mischrohres 115 wird vom Ende E1 der Fangdüse 114 angemessen und beträgt das 11 bis 14-fache des Durchmessers dM des Mischrohres 115. Der Querschnitt des zylindrischen Mischrohres 115 ist mit fM bezeichnet. Die Querschnittsverhältnisse f1 : f2 : fM betragen 1 : (5,5–7,0): (5,0–6,5).

Wird während des Ausströmens von Flüssigkeit Fl aus der Treibdüse 111 die Zufuhr für das Gas G zur Unterdruckkammer 113 geöffnet, so tritt eine bestimmte Gasmenge durch den Querschnitt f2 in die Fangdüse 114 ein. Im Mischrohr werden Flüssigkeit und Gas innig miteinander vermengt. Das aus dem Difusor 116 austretende Flüssigkeits-Gasgemisch wird über die Leitung 19 dem Einlaß 2 des Reaktionsgefäßes 1 zugeführt. Dort geschieht in der oben beschriebenen Weise unter Mitwirkung des Reaktionsgefäßes 11 die gewünschte Reaktion zwischen Gas und Flüssigkeit und insbesondere die Abtrennung des nicht gelösten oder nicht bei der Reaktion verbrauchten Gasanteils aus der Flüssigkeit. Die abgetrennte Flüssigkeit wird durch eine Leitung 18 abgeführt und das abgetrennte Gas verläßt die Einrichtung durch eine Leitung 20.

**Patentansprüche**

1. Einrichtung zur Behandlung einer stark schaumbildenden Flüssigkeit mit einem Gas mit einem Reaktionsgefäß, welches ein zylindrisches Oberteil und ein sich konisch nach unten verjüngendes Unterteil aufweist, wobei am Oberteil tangential zur zylindrischen Innenfläche des Oberteils ein Einlaß für ein Flüssigkeits-Gasgemisch und am oberen Ende des Oberteils in axialer Richtung ein Auslaß für Gas sowie am unteren Ende des Unterteils ein Auslaß für Flüssigkeit angeordnet sind, dadurch gekennzeichnet, daß im Oberteil (1a) unterhalb des Einlasses (2) für das Flüssigkeits-Gasgemisch mindestens ein Zwischenboden (5) mit sich nach oben öffnendem kegelstumpfförmigem Querschnitt und einer zentralen Durchflußöffnung (5a) angeordnet ist, auf dessen Oberseite in radialer Richtung verlaufende Prallbleche (6a bis 6c) vorgegebener Länge und Höhe als Rotationsbrecher angeordnet sind und unmittelbar unterhalb des Zwischenbodens (5) ein mit seiner Spitze nach oben weisender kegelförmiger Verteilerschirm (7) angeordnet ist, dessen Durchmesser kleiner ist als der Innendurchmesser des Oberteils (1a) und daß mindestens ein in axialer Richtung verlaufendes Gasableitungsrohr (8, 9, 10) vorhanden ist, mit einer unterhalb des Verteilerschirms (7) angeordneten Gaseintrittsöffnung (8a, 9a, 10a) und einer im Oberteil (1a) oberhalb des Einlasses (2) für das Gas-Flüssigkeitsgemisch angeordneten Gasaustrittsöffnung (8b, 9b, 10b).

2. Einrichtung nach Anspruch 1, dadurch gekennzeichnet, daß die Prallbleche (6a bis 6c), deren Länge kleiner ist als die Länge der Mantelfläche (5b) des Kegelstumpfes, in Umfangsrichtung in gleichen Winkelabständen (α) und in radialer Richtung gegeneinander versetzt angeordnet.

3. Einrichtung nach Anspruch 2, dadurch gekennzeichnet, daß drei Prallbleche (6a bis 6c) in Winkelabständen von jeweils 120° angeordnet sind, deren Länge ca. der halben Länge der Mantelfläche (5b) des Kegelstumpfes entspricht, wobei das in Durchflußrichtung gesehen erste Prallblech (6a) an die Innenwand des Oberteils (1a) angrenzt, während das dritte Prallblech (6c) an den Außenrand der zentralen Durchflußöffnung (5a) angrenzt und das zweite Prallblech (6b) um eine halbe Länge gegen das erste Prallblech (6a) versetzt angeordnet ist.

4. Einrichtung nach Anspruch 3, dadurch gekennzeichnet, daß die Höhe der Prallbleche (6a bis 6c) ca. $^1/_6$ ihrer Länge beträgt.

5. Einrichtung nach einem der Ansprüche 1 bis 4, dadurch gekennzeichnet, daß der Durchmesser des Verteilerschirms (7) zum Durchmesser des Oberteiles (1) ca. im Verhältnis 6 : 7 steht.

6. Einrichtung nach einem der Ansprüche 1 bis 5, dadurch gekennzeichnet, daß die Kegelhöhe des Verteilerschirms (7) gleich der Kegelstumpfhöhe des Zwischenbodens (5) ist.

7. Einrichtung nach einem der Ansprüche 1 bis 6, dadurch gekennzeichnet, daß der Auslaß (3) für Gas einen Rohrstutzen (3a) aufweist, dessen unteres Ende unterhalb des Einlasses (2) für Flüssigkeits-Gasgemisch liegt.

8. Einrichtung nach einem der Ansprüche 1 bis 7, dadurch gekennzeichnet, daß drei Gasableitungsrohre (8, 9, 10) in Umfangsrichtung in Winkelabständen (β) von 120° angeordnet sind, die jeweils mit ihrem unteren Ende im Unterteil (1b) befestigt sind.

9. Einrichtung nach einem der Ansprüche 1 bis 8, dadurch gekennzeichnet, daß dem Reaktionsgefäß (1) ein zweites Reaktionsgefäß (11) gleicher Bauart zugeordnet ist, dessen Einlaß (12) für ein Flüssigkeits-Gasgemisch an den Auslaß (3) für Gas des ersten Reaktionsgefäßes (1) angeschlossen ist und dessen Auslaß (14) für Flüssigkeit in das erste Reaktionsgefäß (1) unterhalb der Gaseintrittsöffnung (8a, 9a, 10a) des Gasableitungsrohres (8, 9, 10) einmündet.

10. Einrichtung nach Anspruch 9, dadurch gekennzeichnet, daß das zweite Reaktionsgefäß (11) gegenüber dem ersten Reaktionsgefäß derart verkleinert ausgebildet ist, daß sich die Gesamtvolumina der beiden Reaktionsgefäße wie 1 : (5 bis 15) verhalten.

11. Einrichtung nach Anspruch 9 oder 10, dadurch gekennzeichnet, daß in die Leitung (15) zwischen dem Auslaß (14) für Flüssigkeit des zweiten Reaktionsgefäßes (11) und der Einmündung in das erste Reaktionsgefäß (1) ein Siphon (15a) eingeschaltet ist.

12. Einrichtung nach einem der Ansprüche 1 bis 11, dadurch gekennzeichnet, daß in die an den Auslaß für Gas angeschlossene Leitung ein Druckventil (16) eingeschaltet ist.

13. Einrichtung nach einem der Ansprüche 1 bis 12, dadurch gekennzeichnet, daß dem ersten Reaktionsgefäß (1) ein Strahlapparat (100) vorgeschaltet ist, dessen Spritzdüse (111) an eine Flüssigkeitszuleitung (FI), dessen Unterdruckkammer (113) an mindestens eine Gasquelle (G) und dessen Mischrohr (115–116) an den Einlaß (1) für ein Flüssigkeits-Gasgemisch angeschlossen ist.

14. Einrichtung nach Anspruch 13, dadurch gekennzeichnet, daß sich am Strahlapparat die freien Querschnittsflächen des Spritzdüsenaustritts (f1), des Fangdüseneintritts (f2) in der Ebene (E) des Spritzdüsenaustritts sowie des Mischrohres (fM) verhalten wie 1 : (5,5 bis 7,0) : (5,0 bis 6,5) und die Länge (L) des zylindrischen Mischrohres (115) dem (11 bis 14)-fachen Durchmesser (dM) des Mischrohres (115) entspricht.

15. Einrichtung nach Anspruch 14, dadurch gekennzeichnet, daß sich die freien Querschnittsflächen des Spritzdüsenaustritts (f1), des Fangdüseneintritts (f2) in der Ebene des Spritzdüsenaustritts sowie des Mischrohres (fM) verhalten wie 1 : 6,08 : 5,64 und die Länge (L) des zylindrischen Mischrohres (115) dem 12,6-fachen Durchmesser des Mischrohres entspricht.

16. Einrichtung nach Anspruch 14 oder 15, dadurch gekennzeichnet, daß sich an das zylindrische Mischrohr (115) ein sich konisch aufweitendes Mischrohr (116) mit einem halben Öffnungswinkel von 6° anschließt.

17. Verwendung der Einrichtung nach einem der Ansprüche 14 bis 16, dadurch gekennzeichnet, daß die Geschwindigkeit der der Spritzdüse zugeführten Treibflüssigkeit 18–23 m/sec. beträgt.

18. Verwendung der Einrichtung nach Anspruch 16, dadurch gekennzeichnet, daß die Geschwindigkeit des Gas-Flüssigkeitsgemisches an der Übergangsstelle zwischen dem zylindrischen Mischrohr (115) und dem sich konisch aufweitenden Mischrohr (116) kleiner als 2 m/sec. ist.

19. Verwendung der Einrichtung nach einem der Ansprüche 14 bis 16 zur Herabsetzung des pH-Wertes einer stark schaumbildenden Flüssigkeit, dadurch gekennzeichnet, daß die Unterdruckkammer (113) des Strahlapparates (100) an eine Rauchgasquelle (G) angeschlossen ist.

**Claims**

1. Device for the treatment of a strongly foaming liquid with a gas, and with a reaction vessel which has a cylindrical upper part and a conically downwardly tapering lower part, an inlet for a liquid-gas mixture being arranged on the upper part tangentially to the cylindrical inside surface of the upper part and an outlet for gas being arranged at the upper end of the upper part in axial direction and an outlet for liquid at the lower end of the lower part, characterized in that in the upper part (1a) below the inlet (2) for the liquid-gas mixture there is arranged at least one false floor (5) with upwardly opening frustroconical cross-section and a central throughflow opening (5a), on the upper side of which baffles (6a to 6c), running in radial direction, of predetermined length and height, are arranged as rotation breakers, and directly below the false floor (5) there is arranged a conical distributor screen (7), pointing upwards with its tip, the diameter of which screen is smaller than the inside diameter of the upper part (1a), and in that there is at least one gas offtake pipe (8, 9, 10), running in axial direction, with a gas inlet opening (8a, 9a, 10a) arranged below the distributor screen (7) and a gas outlet opening (8b, 9b, 10b) arranged in the upper part (1a) above the inlet (2) for the gas-liquid mixture.

2. Device according to Claim 1, characterized in that the baffles (6a to 6c), the length of which is less than the length of the circumferential surface (5b) of the truncated cone, are arranged mutually offset in circumferential direction at the same angular spacings ($\alpha$) and in radial direction.

3. Device according to Claim 2, characterized in that three baffles (6a to 6c) are arranged at angular spacings of 120° in each case, the length of which baffles corresponds approximately to half the length of the circumferential surface (5b) of the truncated cone, the first baffle (6a), seen in throughflow direction, adjoining the inner wall of the upper part (1a), while the third baffle (6c) adjoins the outer rim of the central throughflow opening (5a) and the second baffle (6b) is arranged offset by half a length with respect to the first baffle (6a).

4. Device according to Claim 3, characterized in that the height of the baffles (6a to 6c) is about $1/6$ of their length.

5. Device according to one of claims 1 to 4, characterized in that the diameter of the distributor screen (7) is in the ratio 6 : 7 with respect to the diameter of the upper part (1 (sic)).

6. Device according to one of Claims 1 to 5, characterized in that the cone height of the distributor screen (7) is equal to the truncated cone height of the false floor (5).

7. Device according to one of Claims 1 to 6, characterized in that the outlet (3) for gas has a pipe connection (3a), the lower end of which lies below the inlet (2) for liquid-gas mixture.

8. Device according to one of Claims 1 to 7, characterized in that three gas offtake pipes (8, 9, 10) are arranged in circumferential direction at angular spacings ($\beta$) of 120°, which are fastened in each case with their lower end in the lower part (1b).

9. Device according to one of Claims 1 to 8, characterized in that the reaction vessel (1) is assigned a second reaction vessel (11) of the same type, the inlet (12) of which, for a liquid-gas mixture is connected to the oulet (3) for gas of the first reaction vessel (1) and the outlet (14) of which, for liquid, opens out into the first reaction vessel (1) below the gas inlet opening (8a, 9a, 10a) of the gas offtake pipe (8, 9, 10).

10. Device according to Claim 9, characterized in that the second reaction vessel (11) is of a reduced design in comparison with the first reaction vessel in such a way that the total volumes of the two reaction vessels relate as 1 : (5 to 15).

11. Device according to Claim 9 or 10, characterized in that a syphon (15a) is inserted in the line (15) between the outlet (14) for liquid of the second reaction vessel (11) and the mouth into the first reaction vessel (1).

12. Device according to one of Claims 1 to 11, characterized in that a pressure valve (16) is inserted in the line connected to the outlet for gas.

13. Device according to one of Claims 1 to 12, characterized in that the first reaction vessel (1) has a jet apparatus (100) connected upstream of it, the spray nozzle (111) of which apparatus is connected to a liquid supply line (f1), the unterpressure chamber (113) of which apparatus is connected to at least one gas source (G) and the mixing tube (115–116) of which apparatus is connected to the inlet (2) for a liquid-gas mixture.

14. Device according to Claim 13, characterized in that, on the jet apparatus, the free cross-sectional areas of the spray nozzle outlet (f1), of the catch nozzle inlet (f2) in the plane E of the spray nozzle outlet and of the mixing tube (fM) relate as 1 : (5.5 to 7.0) : (5.0 to 6.5) and the length (L) of the cylindrical mixing tube (115) corresponds to (11 to 14) times the diameter (dM) of the mixing tube (115).

15. Device according to Claim 14, characterized in that the free cross-sectional areas of the spray nozzle outlet (f1), of the catch nozzle inlet (f2) in the plane of the spray nozzle outlet and of the mixing tube (fM) relate as 1 : 6.08 : 5.64 and the length (L) of the cylindrical mixing tube (115) corresponds to 12.6 times the diameter of the mixing tube.

16. Device according to Claim 14 or 15, characterized in that a conically widening mixing tube (116) with a half aperture angle of 6° adjoins the cylindrical mixing tube (115).

17. Use of the device according to one of Claims 14 to 16, characterized in that the velocity of the propellent liquid fed to the spray nozzle is 18–23 m/sec.

18. Use of the device according to claim 16, characterized in that the velocity of the gas-liquid mixture at the transition point between the cylindrical mixing tube (115) and the conically widening mixing tube (116) is less than 2 m/sec.

19. Use of the device according to one of Claims 14 to 16 for reducing the pH of a strongly foaming liquid, characterized in that the underpressure chamber (113) of the jet apparatus (100) is connected to a flue gas source (G).

## Revendications

1. Dispositif de traitement d'un liquide fortement spumescent par un gaz avec une cuve de réaction qui comporte une partie supérieure cylindrique et une partie inférieure s'amenuisant vers le bas de manière conique, une admission pour un mélange liquide-gaz étant disposée sur la partie supérieure tangentiellement à la surface interne cylindrique de la partie supérieure et, à l'extrémité supérieure de la partie supérieure, dans le sens axial, un échappement pour gaz ainsi qui, à l'extrémité inférieure de la partie inférieure, un échappement pour liquide, caractérisé en ce que, dans la partie supérieure (1a), en-dessous de l'admission (2) pour mélange liquide-gaz, au moins un fond intermédiaire (5) ayant une section en forme de tronc de cône s'évasant vers le haut et une ouverture de passage centrale (5a), sur la face supérieure duquel des chicanes (6a à 6c), disposées dans le sens radial, de longueur et hauteur prédéterminées sont installées et directement en-dessous du fond intermédiaire (5) un écran de répartition (7) de forme conique avec sa pointe dirigée vers le haut est aménagé, dont le diamètre est inférieur au diamètre interne de la partie supérieure (1a) et en ce que au moins un tube d'échappement de gaz (8, 9, 10) disposé dans le sens axial existe, avec une ouverture d'entrée de gaz (8a, 9a, 10a) ménagée en-dessous de l'écran de répartition (7) et une ouverture de sortie de gaz (8b, 9b, 10b) ménagée dans la partie supérieure (1a) au-dessus de l'admission (2) pour mélange liquide-gaz.

2. Dispositif selon la revendication 1 caractérisé en ce que des chicanes (6a à 6c), dont la longueur est plus courte que la longueur des surfaces latérales (5b) du tronc de cône, sont disposées dans le sens périphérique à des distances angulaires égales (α) et sont, dans le sens radial, décalées les unes par rapport aux autres.

3. Dispositif selon la revendication 2 caractérisé en ce que trois chicanes (6a à 6c) sont disposées à des intervalles angulaires de 120°, dont la longueur correspond environ à la moitié de la longueur des surfaces latérales (5b) du tronc de cône, la première chicane (6a), vue dans le sens de l'écoulement, étant disposée au contact de la paroi interne de la partie supérieure (1a), tandis que la troisième chicane (6c) est disposée au contact du bord externe de l'ouverture de passage (5a) centrale et la deuxième chicane (6b) est disposée décalée d'une demi-longueur par rapport à la première chicane (6a).

4. Dispositif selon la revendication 3 caractérisé en ce que la hauteur des chicanes (6a à 6c) s'élève à environ $^1/_6$ de leur longueur.

5. Dispositif selon l'une des revendications 1 à 4 caractérisé en ce que le diamètre de l'écran de répartition (7) se situe dans le rapport de 6 : 7 environ par rapport au diamètre de la partie supérieure (1).

6. Dispositif selon l'une des revendications 1 à 5 caractérisé en ce que la hauteur du cône de l'écran de répartition (7) est égale à la hauteur du tronc de cône du fond intermédiaire (5).

7. Dispositif selon l'une des revendications 1 à 6 caractérisé en ce que l'échappement pour gaz comporte une tubulure (3a) dont l'extrémité inférieure se trouve en-dessous de l'admission (2) pour mélange liquide-gaz.

8. Dispositif selon l'une des revendications 1 à 7 caractérisé en ce que des tuyaux d'échappement du gaz (8, 9, 10) sont disposés dans le sens périphérique à des distances angulaires (β) de 120°, tuyaux qui sont respectivement fixés dans la partie inférieure (1b) par leur extrémité inférieure.

9. Dispositif selon l'une des revendications 1 à 8 caractérisé en ce que, à la cuve de réaction (1), une deuxième cuve de réaction (11) du même genre de construction est associée, dont l'admission (12) pour mélange liquide-gaz est raccordée à l'échappement (3) pour gaz de la première cuve de réaction (1) et dont l'évacuation (14) pour liquide débouche dans la première cuve de réaction (1), en-dessous de l'ouverture d'entrée de gaz (8a, 9a, 10a) du tube d'échappement du gaz (8, 9, 10).

10. Dispositif selon la revendication 9 caractérisé en ce que la deuxième cuve de réaction (11) est constituée de manière si réduite par rapport à la première cuve de réaction que les volumes totaux des deux cuves de réaction se comportent comme 1 : (5 à 15).

11. Dispositif selon la revendication 9 ou 10 caractérisé en ce que dans la conduite (15) entre l'échappement pour liquide de la deuxième cuve de réaction (11) et l'embouchure dans la première cuve de réaction (1) un siphon (15a) est intercalé.

12. Dispositif selon l'une des revendications 1 à 11 caractérisé en ce que, dans la canalisation raccordée à l'échappement pour gaz, une vanne de pression (16) est intégrée.

13. Dispositif selon l'une des revendications 1 à 12 caractérisé en ce que, à la première cuve de réaction (1), un injecteur (100) est intégré dont la buse de pulvérisation (111) est raccordée à une canalisation d'entrée de liquide (F1) dont la chambre sous vide (113) est raccordée à au moins une source de gaz (G) et dont le tube de mélange (115–116) est raccordé à l'admission (2) pour mélange liquide-gaz.

14. Dispositif selon la revendication 13 caractérisé en ce que, sur l'injecteur, les surfaces de section libres de la sortie de tubulure d'échappement (f1), de l'entrée de la buse de réception (f2) dans le plan (E) de la sortie de buse de pulvérisation ainsi que du tube de mélange (fM) se comportent comme 1 : (5,5 à 7,0) : (5,0 à 6,5) et la longueur (L) du tube de mélange cylindrique (115) correspond à (11 à 14) fois le diamètre (dM) du tube de mélange (115).

15. Dispositif selon la revendication 14 caractérisé en ce que les surfaces de section libres de la sortie de tubulure d'échappement (f1), de l'entrée de la buse de réception (f2) dans le plan (E) de la sortie de buse de pulvérisation ainsi que du tube de mélange (fM) se comportent comme 1 : 6,08 : 5,64 et la longueur (L) du tube de mélange cylindrique (115) correspond à 12,6 fois le diamètre du tube de mélange.

16. Dispositif selon la revendication 14 ou 15 caractérisé en ce que, au tube de mélange cylindrique (115), un tube de mélange (116) s'élargissant de manière conique ayant un demi-angle d'ouverture de 6° fait suite.

17. Emploi du dispositif selon l'une des revendications 14 à 16 caractérisé en ce que la vitesse du liquide d'alimentation amené à la buse de pulvérisation s'élève à 18–23 m/sec.

18. Emploi du dispositif selon la revendication 16 caractérisé en ce que la vitesse du mélange liquide-gaz à l'endroit de transition entre le tube de mélange cylindrique (115) et le tube de mélange s'élargissant de manière conique (116) est inférieure à 2 m/sec.

19. Emploi du dispositif selon l'une des revendications 14 à 16 pour l'abaissement de la valeur du pH d'un liquide fortement spumescent caractérisé en ce que la chambre sous vide (113) de l'injecteur (100) est raccordée à une source de gaz de fumée (G).

FIG. 1

FIG.2

FIG.4

FIG. 3